# EUROPÄISCHE PATENTSCHRIFT

(11) **EP 0 498 235 B1**
(45) Veröffentlichungstag und Bekanntmachung des Hinweises auf die Patenterteilung: **14.12.1994**
(21) Anmeldenummer: 92101163.1
(22) Anmeldetag: 24.01.1992
(51) Int. Cl.: F16D 3/77

(54) **Membrankupplungen mit druchbrochenen Konturmembranen**
Coupling with perforated membrane
Accouplement à membrane ajourée

(30) Priorität: 06.02.1991 DE 9101314 U
(43) Veröffentlichungstag der Anmeldung: 12.08.1992
(73) Patentinhaber: ROTAN GmbH, 45475 Mülheim (DE)
(72) Erfinder: Hoppe, Rainer, Dr.-Ing., W-4630 Bochum 6 (DE)
(74) Vertreter: COHAUSZ HASE DAWIDOWICZ & PARTNER

(56) Entgegenhaltungen:
- EP-A- 0 397 314
- DE-U- 8 337 492
- DE-U- 9 101 314
- FR-A- 446 977
- FR-A- 1 021 778
- US-A- 3 041 857
- US-A- 3 677 031
- US-A- 3 959 988
- US-A- 4 411 634

## Beschreibung

Die Erfindung betrifft eine Membrankupplung nach dem Oberbegriff des Anspruchs 1.

Eine derartige Kupplung ist aus der DE-U-83 37 492 bekannt.

Membrankupplungen, deren einfachste Bauform aus einer torsionssteifen Ausgleichsebene besteht, gleichen Winkel- und Axialfehler nichtfluchtender Wellen durch Materialelastizität aus. Mit einer zweiten Ausgleichsebene als Doppelkupplung können Axial-, Winkel- und Radialfehlfluchtungen aufgenommen werden. Für den technischen Einsatz kommt die Ausführung als Zweiebenenkupplung bevorzugt zur Anwendung.

In Ganzmetallausführung besitzt die Membrankupplung eine hohe Drehmoment-, Drehzahl- und Temperaturwiderstandsfähigkeit. Außerdem ist sie äußerst wartungsarm, da bei konstruktiv richtigem Aufbau keinerlei Relativbewegungen an Kontaktflächen auftreten und somit keine Schmierung erforderlich ist.

Die ersten Membrankupplungen fanden in der ersten Hälfte dieses Jahrhunderts Einsatz in Lokomotiven und Flugzeugen. Sie ersetzten infolge ihrer hohen Drehzahl- und Temperaturbeständigkeit und ihrer vibrationsfreien Leistungsübertragung Zahnkupplungen und Gelenkwellen. Die vorteilhaften Eigenschaften dieser Kupplungen eröffneten in den letzten Jahrzehnten weitere Anwendungsgebiete. So werden sie heute in vielen Gasturbinen, Dampfturbinen, schnelllaufenden Zentrifugalkompressoren und Pumpensystemen in Industrieanlagen und Schiffsantrieben benötigt.

In enger Konkurrenz zu Membrankupplungen stehen Ring- und Laschenkupplungen. Diese ebenfalls in Ganzmetallausführungen betriebenen Kupplungen besitzen jedoch geringere Drehmoment-Drehzahlkapazitäten.

Seit dem ersten Einsatz einer Membrankupplung bestehen die Forderungen nach Flexibilitäts- und Leistungssteigerung bei möglichst geringen Rotationsdurchmessern. Daraus resultieren folgende Gestaltungsvarianten bekannter Membranformen:
- Ebene kreisringförmige Membranen ohne Durchbrüche. (DE-U 8 337 492)
- Ebene kreisringförmige Membranen mit Durchbrüchen insbesondere auch infolge radial oder gekrümmt angeordneter Speichen und Stege. (DE-U 8 019 851 )
- Ebene kreisringförmige Membranen mit radial, hyperbolisch abnehmender Stärke. (Bendix Cop. USA )
- Membranen mit konzentrischer Sickung bei konstanter oder variabler Radialkontur. (DE-U 8 019 851)

Aufgabe der Erfindung ist es eine Membrankupplung der eingangs genannten Art so zu verbessern, daß eine höhere Biegeelastizität bei geringstem Drehmoment und Drehzahlkapazitätsverlust besteht.

Diese Aufgabe wird erfindungsgemäß durch die Merkmale des kennzeichnenden Teils von Anspruch 1 gelöst.

Durch die Verbesserung bekannter Fertigungsverfahren und durch den Einsatz neuester Fertigungstechniken ist es möglich Membrankupplungen entsprechend der Erfindung nach hohen Qualitätsanforderungen herzustellen. Bei einem Einsatz der Membrankupplungen unter normalen Temperaturbedingungen bietet es sich an, die Kupplungskomponenten aus hochfesten Verbundwerkstoffen herzustellen. Damit ist ohne Verlust der günstigen kinematischen Eigenschaften eine torsionssteife Kupplung mit niedrigstem Eigengewicht realisierbar. Mit der Verwendung von Kunststoffen können die aufwendigen Schrauben- und Schweißverbindungen durch Klebeverbindungen ersetzt werden.

Solche Kupplungen können beispielsweise in kleineren Baugrößen zur spielfreien Verbindung von Wellen in der Roboter- und Werkzeugmaschinentechnik eingesetzt werden.

Den beiliegenden Zeichnungen sind Ausführungsbeispiele der Erfindung zu entnehmen. Es sind dargestellt:
- Fig. 1: ein Längsschnitt durch eine Kupplung mit Paßschraubenverbindung;
- Fig. 2: ein Längsschnitt durch eine Kupplung mit Reibschlußverbindung;
- Fig. 3: eine durchbrochene Membran mit radial, linear variabler Stärke in Seitenansicht;
- Fig. 4: einen Schnitt nach IV-IV in Fig. 3;
- Fig. 5: einen vergrößerten Ausschnitt aus Fig.4;
- Fig. 6: eine durchbrochene Membran mit radial, linear variabler Stärke und überlagerten konzentrischen Sicken in Seitenansicht;
- Fig. 7: einen Schnit nach VII-VII in Fig. 6;
- Fig. 8: einen vergrößerten Ausschnitt aus Fig. 7;

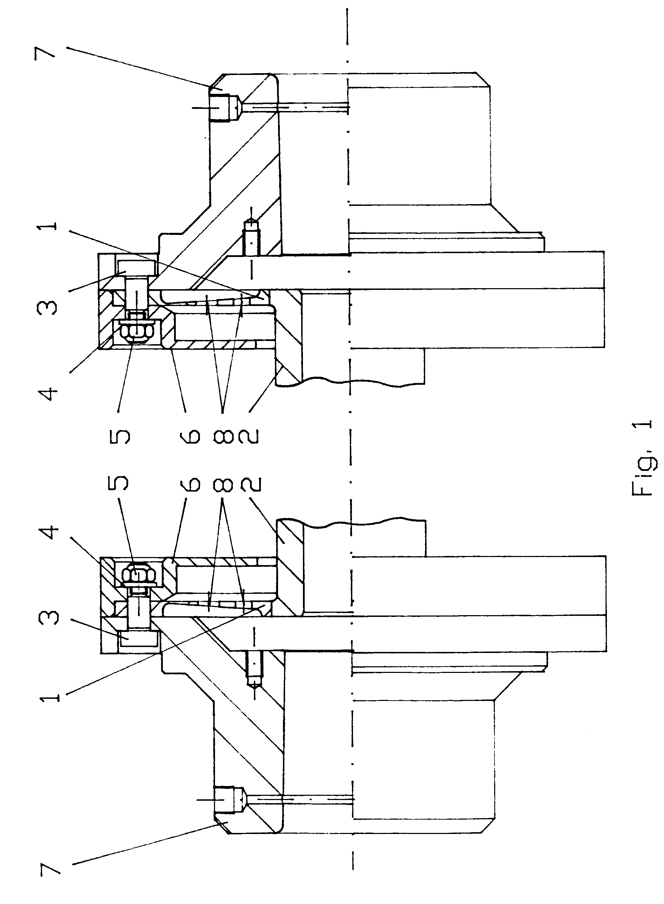

In der Fig. 1 ist der Längsschnitt durch eine Doppelmembrankupplung für höchste Drehmoment- und Drehzahlbeanspruchung dargestellt. Die Membranen 1 sind mit der Verbindungswelle 2 durch eine axial angeordnete Elektronenstrahlschweißnaht verbunden. Am Außendurchmesser übernehmen Paßschrauben 3 die Drehmomentübertragung. Als Welle- Nabeverbindung ist den hohen Drehzahlen zufolge in den Anschlußteilen 7 ein Ölpreßverband vorgesehen. Im elastischen Membranbereich sind Durchbrüche (Öffnungen, Bohrungen) 8 eingebracht, die gleichmäßig über die ringförmige Fläche des elastischen Membranbereichs verteilt sind.

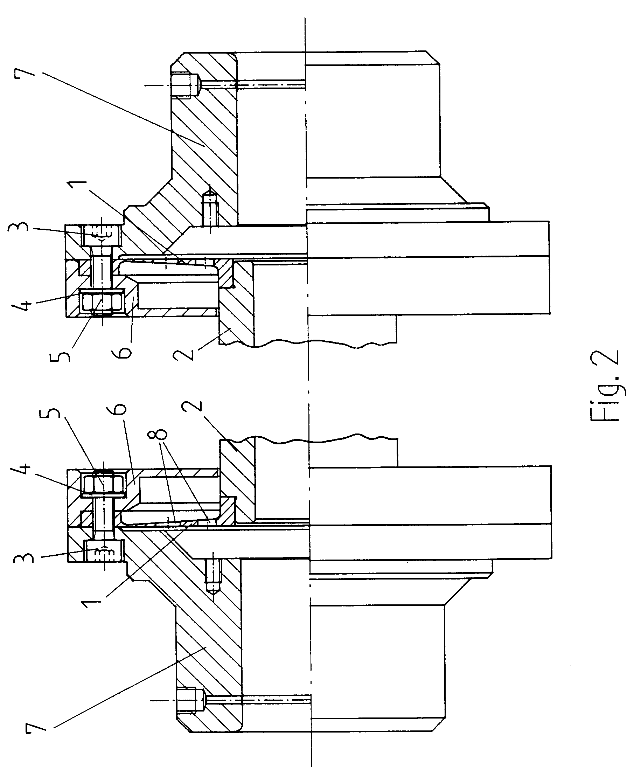

Die Fig. 2 zeigt einen Längsschnitt durch eine Doppelmembrankupplung für den Einsatz bei mittlerer Drehmoment- und Drehzahlbelastung. Hier wird mittels einer reibschlüssigen Schraubenverbindung 3,4,5 am Außendurchmesser der Membranen 1 das Drehmoment übertragen.

Die Verbindung der Membranen 1 mit der Zwischenwelle 2 erfolgt in diesem Fall durch eine radial durchgeführte Elektronenstrahlschweißung.

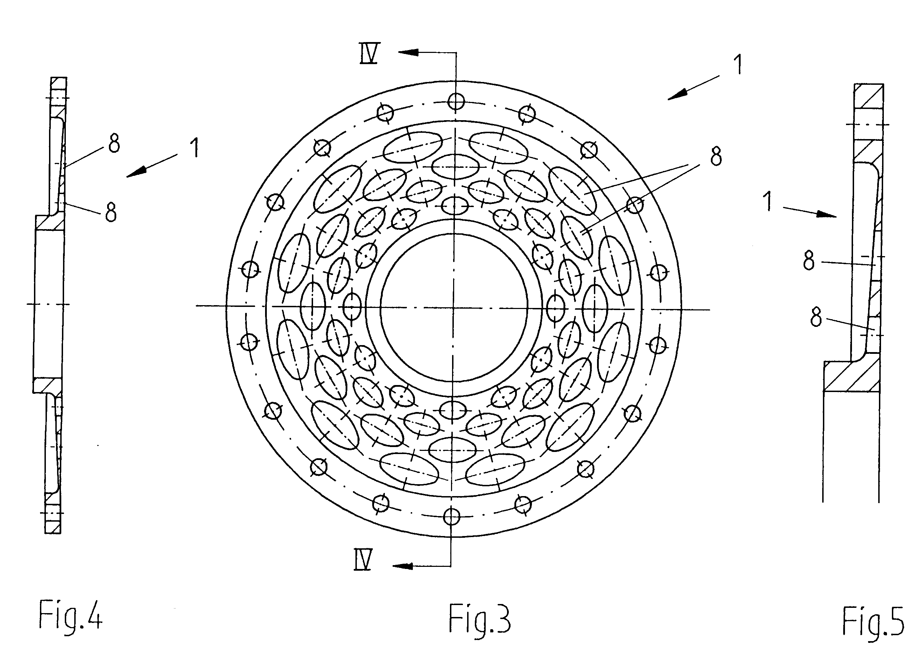

Fig. 3 bis 5 verdeutlichen die Geometrie einer durchbrochenen Konturmembran. Vom Innen- zum Außendurchmesser besitzt die Membran eine linear abnehmende Stärke. Die Mittelpunkte der elliptischen Durchbrüche 8 sind auf vier Teilkreisen konzentrisch angeordnet. Darüber hinaus liegen die Durchbruchmittelpunkte auf, vom Innen- zum Außendurchmesser verlaufenden, logarithmischen Spiralen mit einem Steigungswinkel von 45 Grad. Die Abmessungen der Durchbrüche 8 sind so berechnet, daß der verbleibende Materialquerschnitt in allen Umfangsschnitten gleich groß ist. Die größere Hauptachse der elliptischen Durchbrüche ist tangential und die kleinere Hauptachse radial ausgerichtet.

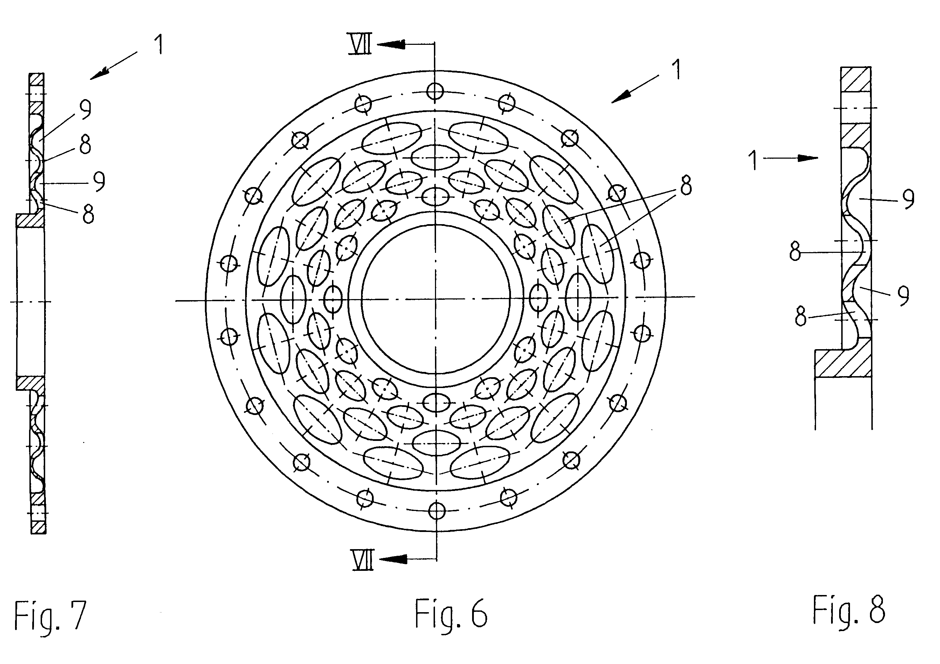

Eine Überlagerung von konzentrischen Sicken 9 im elastischen Membranbereich steigert die Beugefähigkeit der Kupplung zusätzlich. Fig. 6 bis 8 zeigen eine gesickte, durchbrochene Konturmembran. Dabei nimmt die Membranstärke ebenfalls linear mit dem Radius ab. Die Lagen und Abmessungen der Durchbrüche sind dabei nach den gleichen Kriterien festgelegt, welche der Membrankonstruktion entsprechend Fig. 3 zugrunde liegen.

## Patentansprüche

1. Membrankupplung zur torsionssteifen, beugelastischen Verbindung von drehmomentführenden Antriebselementen mit mindestens einer Ausgleichsebene und mindestens einer Membran zwischen den Anschlußteilen (1,2,7,), wobei die Dicke des elastischen Membranbereichs nach außen hin abnimmt, **dadurch gekennzeichnet,** daß im elastischen Membranbereich Durchbrüche (8) in Form von Ellipsen angeordnet sind, deren große dampfachzen in tangentialer Richtung verlaufen.

2. Membrankupplungen nach Anspruch 1, **dadurch gekennzeichnet,** daß im elastischen Membranbereich Sicken (9) konzentrisch angeordnet sind.

3. Membrankupplungen nach Anspruch 1 oder 2, **dadurch gekennzeichnet,** daß die elastischen Elemente der Kupplung sowohl aus metallischen Werkstoffen und/oder Kunststoffen (Verbundwerkstoffen) bestehen.

4. Membrankupplungen nach einem der vorherigen Ansprüche, **dadurch gekennzeichnet,** daß die Durchbrüche (8) auf mindestens zwei Teilkreisen versetzt angordnet und/oder in unterschiedlicher Größe angeordnet sind.

5. Membrankupplungen nach einem der vorherigen Ansprüche, **dadurch gekennzeichnet,** daß die Hauptachsen der elliptischen Durchbrüche (8) radial und tangential ausgerichtet sind.

6. Membrankupplungen nach einem der vorherigen Ansprüche, **dadurch gekennzeichnet,** daß die Mittelpunkte der auf unterschiedlichen Teilkreisen befindlichen Durchbrüche (8) auf sich kreuzenden logarithmischen Spiralen beliebiger Steigung liegen.

7. Membrankupplungen nach einem der vorherigen Ansprüche, **dadurch gekennzeichnet,** daß die Verbindung der Membranen untereinander und mit den Anschlußteilen (1,7) am Außendurchmesser sowohl reibschlüssig mittels Durchgangsschrauben und/oder formschlüssig mittels Klebung, Paßschrauben oder Elektronenstrahlschweißung erfolgt.

8. Membrankupplungen nach einem der vorherigen Ansprüche, **dadurch gekennzeichnet,** daß die Membranen mit einer Zwischenwelle (2) sowohl mit axial oder radial angeordneten Elektronenstrahlschweißnähten als auch mit Paßschrauben-, Zahnwellen- oder Polygonverbindungen angeschlossen sind.

## Claims

1. A membrane clutch for the torsion-proof flexurally resilient connection of torque-carrying driving elements, having at least one compensating plane and at least one diaphragm between the connecting members (1, 2, 7), the thickness of the resilient membrane zone decreasing in the outward direction, characterized in that disposed in the resilient membrane zone are openings (8) in the form of ellipses whose major main axes extend in the tangential direction.

2. Membrane clutches according to claim 1, characterized in that beads (9) are disposed concentrically in the resilient membrane zone.

3. Membrane clutches according to claims 1 or 2, characterized in that the resilient elements of the clutch are made from both metallic materials and/or plastics (composite materials).

4. Membrane clutches according to one of the preceding claims, characterized in that the openings (8) are disposed offset on at least two reference circles and/or are disposed in different sizes.

5. Membrane clutches according to one of the preceding claims, characterized in that the main axes of the elliptical openings (8) are tangentially aligned.

6. Membrane clutches according to one of the preceding claims, characterized in that the central points of the openings (8) situated on different reference circles lie on intersecting logarithmic spirals of any pitch.

7. Membrane clutches according to one of the preceding claims, characterized in that the membranes are connected to one another and to the connecting members (1, 7) on the external diameter both by frictional connection, using through bolts, and/or by positive connection, using gluing, fitted bolts or electron beam welding.

8. Membrane clutches according to one of the preceding claims, characterized in that the membranes are connected to an intermediate shaft (2) both via axially or radially disposed electron beam welding seams and also via fitting bolt, serrated shaft or polygon connections.

## Revendications

1. Accouplement à membranes pour la liaison rigide en torsion, élastique en fléchissement d'éléments d'entraînement transmettant des couples de torsion, avec au moins un plan d'équilibrage et au moins une membrane entre les pièces de raccordement (1,2,7), l'épaisseur de la zone élastique de membrane diminuant en direction de l'extérieur, caractérisé en ce que des ajours (8) en forme d'ellipse, dont les grands axes s'étendent en direction tangentielle, sont disposés dans la zone élastique de membrane.

2. Accouplements à membranes selon la revendication 1, caractérisés en ce que des moulures (9) sont disposées concentriquement dans la zone élastique de membrane.

3. Accouplements à membranes selon la revendication 1 ou 2, caractérisés en ce que les éléments élastiques de l'accouplement sont constitués aussi bien de matériaux métalliques et/ou de matériaux synthétiques (matériaux composites).

4. Accouplements à membranes selon l'une des revendications précédentes,
caractérisés en ce que les ajours (8) sont disposés décalés en au moins deux cercles primitifs et/ou de grandeurs différentes.

5. Accouplements à membranes selon l'une des revendications précédentes,
caractérisés en ce que les grands axes des ajours elliptiques (8) sont dirigés radialement et tangentiellement.

6. Accouplements à membranes selon l'une des revendications précédentes,
caractérisés en ce que les centres des ajours (8) se trouvant sur des cercles primitifs différents sont sur des spirales logarithmiques de pente quelconque qui se croisent.

7. Accouplements à membranes selon l'une des revendications précédentes,
caractérisés en ce que la liaison des membranes les unes sous les autres et avec les pièces de raccordement (1,7) s'effectue sur le diamètre extérieur aussi bien à entraînement par friction au moyen de vis traversantes et/ou à fermeture géométrique au moyen d'un collage, de boulons calibrés ou d'un soudage par bombardement électronique.

8. Accouplements à membranes selon l'une des revendications précédentes,
caractérisés en ce que les membranes sont raccordées à un arbre intermédiaire (2) aussi bien par des cordons de soudure par bombardement électronique disposés axialement ou radialement que par des liaisons à boulons calibrés, à arbres cannelés ou polygonales.
